# EUROPEAN PATENT SPECIFICATION

(11) **EP 3 835 246 B1**
(45) Date of publication and mention of the grant of the patent: **11.09.2024**
(21) Application number: 20210136.6
(22) Date of filing: 26.11.2020
(51) Int. Cl.: B66B 1/34, B66B 1/24, B66B 3/00

(54) **IMPROVED PASSENGER INTERFACE FOR SHUTTLE ELEVATOR SYSTEM**
VERBESSERTE PASSAGIERSCHNITTSTELLE FÜR SHUTTLE-AUFZUGSSYSTEM
INTERFACE DE PASSAGERS AMÉLIORÉE POUR SYSTÈME DE NAVETTE D'ASCENSEUR

(30) Priority: 26.11.2019 US 201962940385 P
(43) Date of publication of application: 16.06.2021
(73) Proprietor: Otis Elevator Company, Farmington, Connecticut 06032 (US)
(72) Inventor: HSU, Arthur, Farmington, CT Connecticut 06032 (US)
(74) Representative: Dehns

(56) References cited:
- WO-A1-2014/171296
- JP-A- 2016 064 885
- JP-A- 2018 002 351
- JP-A- 2018 030 655

## Description

### BACKGROUND

The embodiments herein relate to the field of conveyance systems, and more particularly, to processing conveyance system service requests.

Modern development in high-rise building and skyscraper architecture has led to the design and construction of skyscrapers classified as "supertall" buildings that exceed about 985 feet (about 300 meters) or even "megatall" buildings, which can exceed 19,970 feet (about 600 meters). However, implementing conventional elevator systems in supertall or megatall buildings can present issues. For example, travelers aiming to reach a specific higher floor may in a supertall building conceivably must stop at a very large number of other floors to let other passengers off and on before reaching their destination. This increases travel time for travelers aiming to reaching the highest floors, and indirectly requires many more elevator shafts to still allow acceptable travel times, thereby reducing effective floor space on each floor for all levels.

One solution to reduce elevator traveling time in supertall or megatall buildings has been the design and implementation of "sky lobbies", which are sometimes referred to as "shared lobbies." A sky lobby is an intermediate interchange floor in the building where people can transfer from a shuttle elevator (sometimes referred to as an shuttle lift or express elevator) to one or more conventional elevators that serve a particular segment of the building. Unlike conventional elevators, a shuttle elevator travels directly between the sky lobby and another floor (e.g., from the sky lobby to the ground floor or from the sky lobby to the roof). Once at the sky lobby, travelers can transfer to the conventional elevator system which stops at every floor included in the segmented portion of the building.

JP 2018 030655 A describes an elevator system operating a plurality of elevators each having a door that faces a landing, an information output device for notifying information of the next arriving elevator car before it arrives, and an elevator group management and user guidance device for managing operations of the plurality of elevators and outputting information to the information output device. The information output device notifies users standing on an landing entrance of the elevator number of an elevator corresponding to the next elevator car arriving at a floor with the information output device provided, a position of the landing of the elevator, and the number of passengers in the elevator.

WO 2014/171296 A1 describes an elevator system with a group management control system that manages the operation of a plurality of elevator cars, and is provided with: a destination floor user number totaling processing unit that totals the number of passengers boarding from each floor from the number of times that a destination floor call is registered and totals the number of passengers disembarking at each floor from the passenger number for each destination floor call; and a processing unit for predicting the number of people within an elevator car that calculates the number of passengers in an elevator car as a prediction value from the determined number of passengers boarding from each floor, the number of passengers disembarking at each floor, and the number of people who are currently in the elevator car. The name of an elevator car and/or the floor(s) at which said elevator car will stop are announced for an elevator car that it is determined to be an elevator car that will not reach full capacity on the basis of the prediction value. As a result, elevator transport capacity is improved during periods of congestion even when the boarding area is in a saturated state due to the number of people who are present in said boarding area.

### SUMMARY

The present invention is defined by the scope of the appended claims 1-12. According to a first aspect, a shuttle elevator loading system is provided in accordance with claim 1.

In some embodiments, the elevator system controller dynamically controls the at least one display unit based on the assignment information.

In some embodiments, the elevator controller controls the elevator shuttle loading system to reduce passenger crowding based on the number of allocated passengers corresponding to at least one of the shuttle elevators.

In some embodiments, the elevator system controller controls the arrival display unit to display assignment information that directs a non-allocated passenger to an available shuttle elevator.

In some embodiments, the display assignment information is dynamically changed as an availability of the shuttle elevators changes.

In some embodiments, the elevator system controller is configured to control boarding of the at least one passenger based on a number of allocated passenger corresponding to a given shuttle elevator.

In some embodiments, the at least one sensor comprises a sensor configured to monitor each individual elevator queue and to detect one or more persons in the vicinity of one or more of the elevator queues.

In some embodiments, the at least one sensor includes an elevator queue sensor installed at an individual elevator queue.

In some embodiments, the elevator queue sensor is configured to monitor the individual elevator queue and to detect one or more persons in the vicinity of the individual elevator queue.

According to second aspect, a method of controlling a shuttle elevator loading system is provided in accordance with claim 7.

Further embodiments may include dynamically controlling the at least one display unit based on the assignment information.

Further embodiments may include controlling the elevator shuttle loading system to reduce passenger crowding based on the number of allocated passengers corresponding to at least one of the shuttle elevators.

Further embodiments may include controlling the arrival display unit to display the assignment information that directs a non-allocated passenger to an available shuttle elevator.

Further embodiments may include dynamically changing the assignment information as an availability of the shuttle elevators changes.

Further embodiments may include controlling boarding of the at least one passenger based on a number of allocated passenger corresponding to a given shuttle elevator.

Technical effects of embodiments of the present disclosure include the ability to process a service request related to a conveyance system and determine whether to initiate a service call based on one or both of system status and one or more inputs.

The foregoing features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts an elevator system that may employ various embodiments of the present disclosure.
FIG. 2 depicts a building including a shuttle elevator system according to a non-limiting embodiment;
FIG. 3 is a plan view of a building lobby serviced by a shuttle elevator system that operates according to an improved passenger boarding system according to a non-limiting embodiment; and
FIG. 4 depicts various dynamic displays installed at display zones of the lobby shown in FIG. 3 according to a non-limiting embodiment.

### DETAILED DESCRIPTION

As described above, shuttle elevators system are different from conventional elevator systems in that the destination of a given shuttle elevator is already known rather requiring a passenger to input a destination floor. However, shuttle elevator systems typically include a group of several individual shuttle elevators capable of servicing one or more passengers. Known boarding methods allow passengers to simply choose any shuttle elevator within the group without any guidance or direction. Further, the shuttle elevator door remains opens or is closed based on a fixed timer regardless as to the number of passengers boarded in a given car or attempting to board the car. This method reduces travel efficiently because it allows for one or more given shuttle cars to be overloaded and/or slows departure times, while one or more other shuttle cars remain available to provide a quicker and more convenient travel experience. Hence the challenge is to efficiently direct passengers to fill one so that it can leave immediately before directing passengers to the next.

At least one non-limiting embodiment of the invention provides a shuttle elevator system including an improved passenger boarding system. The shuttle elevator boarding system includes one or more passenger sensors that operate in conjunction with an arrival display zone. The sensor(s) detect a current number of passengers allocated to a given in real-time. Based on the allocated passengers, the arrival display zone directs one or more passengers to a particular shuttle car that will provide the most efficient travel experience (e.g., the quickest departure without being overcrowded with an excessive number of passengers).

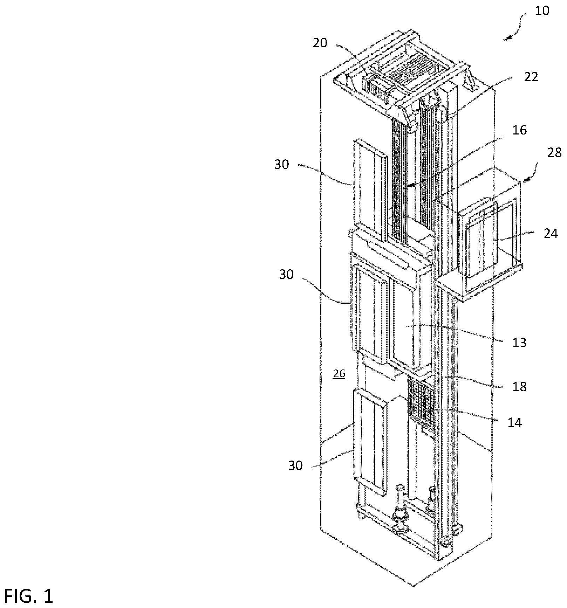

With reference now to FIG. 1, a perspective view of a conveyance system in the form of an elevator system 10 is illustrated according to a non-limiting embodiment. The elevator system includes an elevator car 13, a counterweight 14, a tension member 16, a guide rail 18, a machine 20, a position reference system 22, and an elevator controller 24. Although the elevator car 13 is illustrated as a single-deck car, other types of elevator cars such as a double-deck car, for example, can be implemented without departing from the scope of the invention.

The elevator car 13 and counterweight 14 are connected to each other by the tension member 16. The tension member 16 may include or be configured as, for example, ropes, steel cables, and/or coated-steel belts. The counterweight 14 is configured to balance a load of the elevator car 13 and is configured to facilitate movement of the elevator car 13 concurrently and in an opposite direction with respect to the counterweight 14 within an elevator hoistway 26 and along the guide rail 18.

The tension member 16 engages the machine 20, which is part of an overhead structure of the elevator system 10. The machine 20 is configured to control movement between the elevator car 13 and the counterweight 14. The position reference system 22 may be mounted on a fixed part at the top of the elevator hoistway 26, such as on a support or guide rail, and may be configured to provide position signals related to a position of the elevator car 13 within the elevator hoistway 26. In other embodiments, the position reference system 22 may be directly mounted to a moving component of the machine 20, or may be located in other positions and/or configurations as known in the art. The position reference system 22 can be any device or mechanism for monitoring a position of an elevator car and/or counter weight, as known in the art. For example, without limitation, the position reference system 22 can be an encoder, sensor, or other system and can include velocity sensing, absolute position sensing, etc., as will be appreciated by those of skill in the art.

The elevator controller 24 is located, as shown, in a controller room 28 of the elevator hoistway 26 and is configured to control the operation of the elevator system 10, and particularly the elevator car 13. For example, the elevator controller 24 may provide drive signals to the machine 20 to control the acceleration, deceleration, leveling, stopping, etc. of the elevator car 13. The elevator controller 24 may also be configured to receive position signals from the position reference system 22 or any other desired position reference device. When moving up or down within the elevator hoistway 26 along guide rail 18, the elevator car 13 may stop at one or more landings 125 as controlled by the elevator controller 24. Although shown in a controller room 28, those of skill in the art will appreciate that the elevator controller 24 can be located and/or configured in other locations or positions within the elevator system 10. In one embodiment, the elevator controller 24 may be located remotely or in the cloud.

The machine 20 may include a motor or similar driving mechanism. In accordance with embodiments of the disclosure, the machine 20 is configured to include an electrically driven motor. The power supply for the motor may be any power source, including a power grid, which, in combination with other components, is supplied to the motor. The machine 20 may include a traction sheave that imparts force to tension member 16 to move the elevator car 13 within elevator hoistway 26.

Although shown and described with a roping system including tension member 16, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in FIG. 1. In one example, embodiments disclosed herein may be applicable conveyance systems such as an elevator system 10 and a conveyance system component such as an elevator car 13 of the elevator system 10. In another example, embodiments disclosed herein may be applicable conveyance systems such as an escalator system and a conveyance system component such as a moving stair of the escalator system.

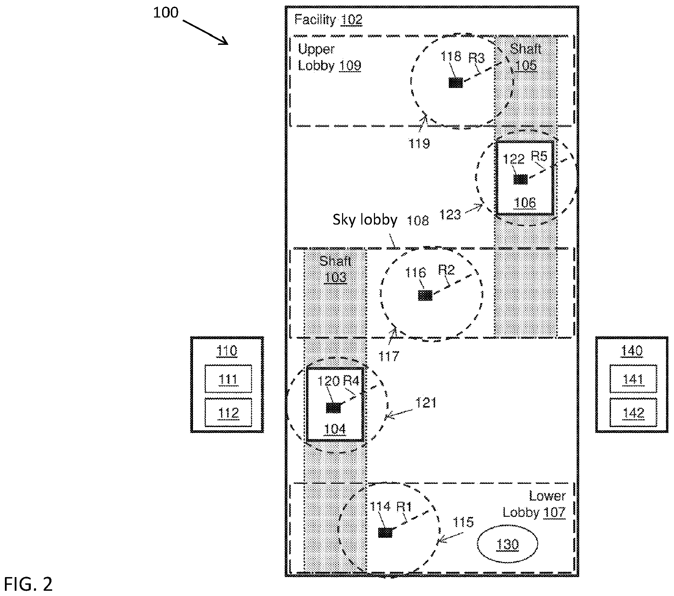

Turning to FIG. 2, a building facility 102 including a shuttle elevator system 100 is illustrated according to a non-limiting embodiment. The environment can include a facility 102 (e.g., a high rise building) comprising at least one elevator shaft supporting at least one elevator car. The facility 102 includes an elevator shaft 103 supporting an elevator car 104 and an elevator shaft 105 supporting an elevator car 106. Note that the elevator car 104 can be accessed at least at a lower lobby 107 (e.g., a ground floor of the facility 102) and a shared lobby 108 (e.g., a middle floor of the facility 102). Further, note that the elevator car 106 can be accessed at least at the shared lobby 108 and an upper lobby 109 (e.g., a top floor of the facility 102). In this regard, the shaft 103 only permits the elevator car 104 to travel between a lower floor and a middle floor (which can be considered an initial segment), and the shaft 105 only permits the elevator car 106 to travel between the middle floor and a top floor (which can be considered a subsequent segment). The arrangement of elevator shafts 103 and 105 is for exemplary purposes only and any desired arrangement and number of elevator shafts and elevator cars may be used.

The shuttle elevator system 100 comprises a computer 110. The computer 110 comprises a processor 111 and a memory 112. The memory 112 stores program instructions that are executable by the processor 111 to cause the operation described herein. The computer 110 can support and/or be a part of an elevator system that operates the elevator cars 104 and 105. The elevator system comprises one or more location devices.

In accordance with one or more embodiments, the one or more location devices can comprise at least a location device 114 with a location zone 115 (extending a radius R1), a location device 116 with a location zone 117 (extending a radius R2), a location device 118 with a location zone 119 (extending a radius R3), a location device 120 with a location zone 121 (extending a radius R4), and a location device 122 with a location zone 123 (extending a radius R5). The location device 114 can be located within and correspond thereto the lower lobby 107. The location device 116 can be located within and correspond thereto the shared lobby 108. The location device 118 can be located within and correspond thereto the upper lobby 109. The location device 130 can be located within and correspond thereto the elevator car 104. The location device 122 can be located within and correspond thereto the elevator car 106. Note that each radius of the location zone 115 can be predetermined and configured within the elevator system, such as at a distance of a width of the a lobby or an elevator car. The elevator system interacts with a mobile device (e.g., the mobile device 130) to provide a hands-free user interface for generating elevator calls.

Moreover, any location zone and location device may be placed as desired within shuttle the elevator system 100, such as in an elevator fixture. In one embodiment, the location zone may be rectangular, planar, 3-dimensional, or any other desired shape.

The elevator system 100 described herein is an example and is not intended to suggest any limitation as to the scope of use or operability of embodiments described herein (indeed additional or alternative components and/or implementations may be used). Further, while single items are illustrated for items of the elevator system 100, these representations are not intended to be limiting and thus, any item may represent a plurality of items. Embodiments of t the elevator system 100 can include configurations for a mobile device centric system (e.g., when the mobile device 130 detects trigger signals from the one or more location devices), a location device centric system (e.g., when the one or more location devices detects trigger signals from the mobile device 130), or a combination thereof. Further, embodiments of the elevator system 100 and the elevator system can include configurations for a lobby focused system, an elevator focused system, or a combination thereof.

The elevator system 100 can satisfy single-segment elevator trips and multi-segment elevator trips. In accordance with one or more embodiments, if multiple event triggers are placed on a same floor, the elevator system 100 can detect a sequence of these multiple event triggers to automatically place a single-segment trip. Further, the elevator system 100 can determine how many elevator trip segments are required for the multi-segment trip and what guidance should be provided to a user during the multi-segment trip.

The computer 110 can include any processing hardware, software, or combination of hardware and software utilized by the elevator system to carry out computer readable program instructions by performing arithmetical, logical, and/or input/output operations. The computer 110 can be implemented local to the facility 102, remote to the facility 102, or as a cloud service. The computer 110 can be representative of a plurality of computers dispersed throughout the elevator system 100. The processor 111 can comprise one or more central processing units (CPU(s)), also referred to as processing circuits, coupled via a system bus to the memory 112 and various other internal or external components (e.g., the location devices 114, 116, 118, 120, and 122). The memory 112 can include a read only memory (ROM) and a random access memory (RAM). The computer 110, by utilizing the processor 111 and the memory 112, operates to provide/support automatic calls of the elevator system for navigation in the facility 102 with respect to any elevator trip. The computer 110, by utilizing the processor 111 and the memory 112, operates to support the hands-free user interface of the mobile device 130 for navigation in the facility 102 with respect to any elevator trip. The computer 110, by utilizing the processor 111 and the memory 112, can operate to communicate with the location devices 114, 116, 118, 120, and 122. The computer 110 can also determine a status of each elevator car 104 and 106, such as which floor an elevator car is located, which direction an elevator car is traveling, a number of stops designated for an elevator trip, an elevator door position, an elevator door operation (opening vs. closing), etc. The computer 110 can operate one or more timers (e.g., movement timers and disconnect timers) with respect to the operations described herein.

The location devices 114, 116, 118, 120, and 122 can be an electromechanical component that generates the corresponding location zones 115, 117, 119, 121, and 123. Examples of the location devices 114, 116, 118, 120, and 122 include radio devices, such as Wi-Fi devices, Bluetooth devices, wireless beacon devices, etc. The location devices 114, 116, 118, 120, and 122 can utilize software and/or firmware to carry out operations particular thereto. In this regard, the location devices 114, 116, 118, 120, and 122 can be configured to provide triggering signals (e.g., one-way communication devices advertising a location; a radio signal being broadcast to the mobile device 130). For example, the location devices 114, 116, 118, 120, and 122 themselves can provide a triggering signal to the mobile device that causes the mobile device 130 to place an elevator call, e.g., if the mobile device receives a correct event trigger sequence, with is a set of ordered interactions between the mobile device 130 and the location devices 114, 116, 118, 120, and 122.

The location devices 114, 116, 118, 120, and 122 can include transceivers (e.g., communications and/or interface adapter) that can communicate with the computer 110 and/or the mobile device 130. The location devices 114, 116, 118, 120, and 122 may communicate with the computer 110 with wires or wirelessly. In this regard, the location devices 114, 116, 118, 120, and 122 can be configured to detect the mobile device 130 (e.g., continuously sensing the mobile device 130; the mobile device 130 altering a field of the corresponding location zone) and/or communicate with the mobile device 130 with respect to the corresponding location zones 115, 117, 119, 121, and 123. For example, the location devices 114, 116, 118, 120, and 122 themselves can automatically cause the execution of an elevator call based on one or more event trigger sequences respective to interactions with the mobile device 130. Further, the location devices 114, 116, 118, 120, and 122 can generate one or more electrical signals to the computer 110 as a function of the mobile device detection (e.g., generates an electrical signal in response to detecting a presence of the mobile device 130) and/or the mobile device communication.

The mobile device 130 can include any processing hardware, software, or combination of hardware and software utilized to carry out computer readable program instructions by performing arithmetical, logical, and/or input/output operations. The mobile device 130 can include any wireless device operated by a passenger, such as a laptop, a table computer, a mobile phone, a smartphone, a wireless beacon on the user (e.g., an electronic bracelet), radio frequency identification card, smartwatches, implants, smart glasses, wearable components, and the like. The mobile device 130 can interact/detect/communicate with the one or more location devices of the elevator system, can support/provide/execute an application and a hands-free user interface, and can connect to the computer 110 or a cloud server 140 (wirelessly through an internet, cellular, or cloud connection).

The cloud server 140, comprising a processor 141 and a memory 142 as described herein, can include any processing hardware, software, or combination of hardware and software in communication with the mobile device 130 to carry out computer readable program instructions by performing arithmetical, logical, and/or input/output operations. The cloud server 140 can be implemented local to the facility 102, remote to the facility 102, or as a cloud service to the mobile device 130. The cloud server 140, by utilizing the processor 141 and the memory 142, operates to support automatic calls executed by the mobile device 130.

In accordance with one or more embodiments, the mobile device 130 executes elevator calls in response to one or more event trigger sequences based on a logic in the application (to interpret a correct sequence). The application allows the mobile device 130 to send messages via cellular towers or other communication means (provide information over the internet to cloud-based internet servers, such as the cloud server 140). The cloud server 140 can in turn send elevator requests to the elevator controllers (e.g., the computer 110) in a specific building (e.g., the facility 102). Thus, the mobile device 130 detecting a trigger at one of the lobbies 107, 108, and 109 or within the elevator car 104 or 106 is able to send a message through a cellular network that eventually is received by the elevator system. Further, the logic in the application can store default, preset, and/or manual entries of floor destinations with respect to a user profile within the application and can cause the execution of elevator calls based on these entries as the mobile device 130 interacts with the elevator system 100. In accordance with one or more embodiments, the mobile device 130 outputs a unique signal identifying the mobile device 130 to the location devices 114, 116, 118, 120, and 122 to provide one or more event trigger sequences to the elevator system 100. An event trigger sequence is a set of ordered interactions between the mobile device and the location devices 114, 116, 118, 120, and 122. The elevator system can also operate automatic calls based on sequential detections of the mobile device 130 (e.g., an event trigger sequence). In this regard, the elevator system can execute each segment request internally, while a user is continuously notified of each elevator assignment without user confirmation (e.g., hands-free operation).

In accordance with one or more embodiments, the elevator system 100 herein can be applied to non-smartphone type systems where a passenger's identity is automatically detected via biometric scans or other means (the same resulting multi-segment trip call could be executed). For example, if a video analytics system is in-place at each floor, a process flow can be executed where if a user is detected on the lower lobby 107 and then the user is detected in elevator 104, then an elevator call for the elevator 106 is automatically placed for the user at shared lobby 108.

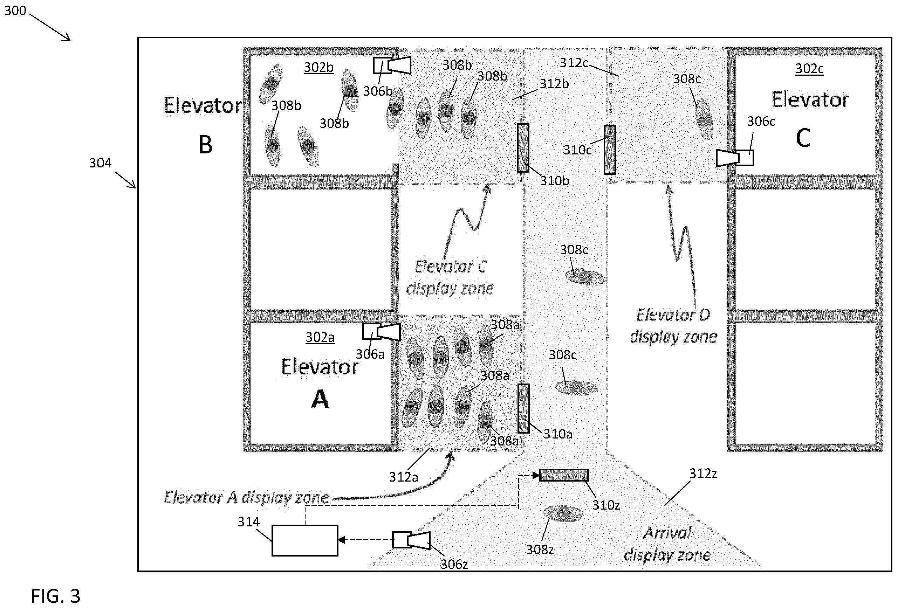

Referring now to FIG. 3, a shuttle elevator loading system 300 is illustrated according to a non-limiting embodiment. The shuttle elevator loading system 300 includes a plurality of shuttle elevators 302a, 302b, 302c configured to service a building lobby 304. The shuttle elevator system 300 operates differently from conventional elevator systems in that it is capable of servicing passengers without requiring call buttons or floor destination selection buttons. That is, when a shuttle elevator 302a, 302b, 302c is assigned a call, the doors of the called shuttle elevator are opened for a set time period and departs when the time period expires.

The shuttle elevator loading system 300 further includes one or more sensors 306a, 306b, 306c, 306z configured to detect one or more one passengers 308a, 308b, 308c, 308z, one or more display units 310a, 3 10b, 310c, 310z located at a display zone 312a, 312b, 312c, 312z of the lobby 304, and an elevator system controller 314. Accordingly, the shuttle elevator loading system 300 can execute a closed-loop passenger allocation process (rather than open-loop timer parameters), which actively directs and loads passengers to fill a targeted shuttle elevator before directing passengers to one or more remaining shuttle elevators that are partially filled or currently unavailable for boarding.

The sensors 306a, 306b, 306c, 306z include a lobby sensor 306z and elevator sensors 306a, 306b, 306c. The lobby sensor 306z can monitor the entire lobby 304 simultaneously and is configured to detect one or both of an allocated passenger 308a, 308b, 308c that is allocated to a shuttle elevator 302a, 302b, 302c, respectively, and a non-allocated passenger 308z that is not allocated to a shuttle elevator 302a, 302b, 302c. The elevator sensors 306a, 306b, 306c are installed at a respective shuttle elevator 302a, 302b, 302c (e.g., at the outside and/or inside of the elevator car) and/or at a respective elevator display zone 312a, 312b, 312c. Accordingly, the elevator sensors 306a, 306b, 306c can detect one or more allocated passengers 308a, 308b, 308c that are allocated to the shuttle elevator 302a, 302b, 302c servicing a respective elevator display zone 312a, 312b, 312c.

The lobby sensor 306z and/or the elevator sensors 306a, 306b, 306c can be constructed as various types of sensors or sensor systems including, but not limited to, a person recognition sensor and sensor system, or a motion detection sensor. The person recognition sensor system includes, for example, a camera and controller capable of detecting and tracking human movement and location.

The motion sensor is configured to detect motion of a passenger 308a, 308b, 308c, 308z. In one or more embodiments, the motion sensors can include an arrival motion sensor 306z and elevator motion sensor 306a, 306b, 306c. The arrival motion sensor 306z is configured to detect motion of a passenger 308z located at the arrival display zone 312z. The elevator motion sensors 306a, 306b, 306c are configured to detect motion of one or more passengers 308a, 308b, 308c located at a respective elevator display zone 312a, 312b, 312c.

The elevator system controller 314 is in signal communication with the sensors 306a, 306b, 306c, 306z, the display units 310a, 310b, 310c, 310z and the shuttle elevators 302a, 302b, 302c, while also monitoring passenger count and location in the lobby 304 and/or a given shuttle elevator 302a, 302b, 302c. The elevator controller 314 can be constructed as an electronic hardware controller that includes memory and a processor configured to execute algorithms and computer-readable program instructions stored in the memory. Accordingly, the elevator controller 314 can determine a number of allocated passengers 308a, 308b, 308c, 308z corresponding to each shuttle elevator 302a, 302b, 302c, and can generate assignment information that directs a non-allocated passenger 308z to an available shuttle elevator 302c.

The display units include an arrival display unit 3 10z and a plurality of elevator display units 310a, 310b, 310c. The arrival display unit 310 is located in an arrival display zone 312z that precedes the plurality of shuttle elevator 302a, 302b, 302c in order to reduce the possibility that a non-allocated passenger 308z will randomly choose to move toward a crowded shuttle elevator or a shuttle elevator that is not currently boarding passengers. Accordingly, once the elevator controller 314 determines which shuttle elevator is to be allocated to a given passenger, the elevator controller 314 can control the arrival display unit 310z to display assignment information instructing the allocated passenger to move to the corresponding shuttle elevator.

The elevator display units 310a, 310b, 310c are located at a respective elevator display zone 312a, 312b, 312c, which are located beyond the arrival display zone 312. Accordingly, the elevator display units 310a, 310b, 310c identify a respective shuttle elevator 302a, 302b, 302c such that passengers 308a, 308b, 308c can confirm that they are waiting at the correct zone 312a, 312b, 312c instructed by the arrival display unit 310z.

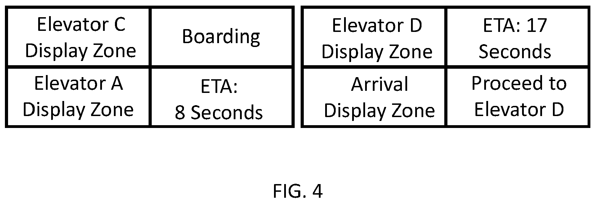

Examples of the elevator display units 310a, 310b, 310c, 310z are illustrated in FIG. 4. The arrival display unit 310 is configured to display assignment information that directs a non-allocated passenger 308z to an available shuttle elevator, e.g., shuttle elevator 302c. The display assignment information is dynamically changed as the availability and/or load of the shuttle elevators 302a, 302b, 302c change. The elevator display units 310a, 310b, 310c are configured to display boarding information of the shuttle elevators 302a, 302b, 302c corresponding to their respective display zones 312a, 312b, 312c. The boarding information includes, but is not limited to, an on-going boarding event, and an estimated time at which a boarding event will occur.

The elevator controller 314 directs passengers 308a, 308b, 308c, 308z to queue at the first available car until the sensors 306a, 306b, 306c, 306z indicate a given shuttle elevator 302a, 302b, 302c is fully allocated (e.g., currently on-board or waiting to board). The elevator controller 314 then directs passengers to the next available second shuttle elevator. Therefore, the elevator controller 314 can execute a closed-loop passenger allocation process (rather than open-loop timer parameters), which actively directs and loads passengers to fill a targeted shuttle elevator before directing passengers to one or more remaining shuttle elevators that are partially filled or currently unavailable for boarding

The elevator controller 314 dynamically allocates passengers to a given shuttle elevator 302a, 302b, 302c based on the detection and monitoring performed by the sensors 306a, 306b, 306c, 306z, along with a preset passenger threshold assigned to the shuttle elevators 302a, 302b, 302c. For example, the elevator controller 314 can constantly track passenger allocations corresponding to each shuttle elevator 302a, 302b, 302c. Passenger allocations include the initial allocations determined by the elevator controller 314 at the initial time at which a passenger enters the arrival display zone 312z. And passenger allocations can include the actual location of a passenger determined by the sensors 306a, 306b, 306c, 306z. Accordingly, the elevator controller 314 can compare the number of passengers allocated to a given shuttle elevator 302a, 302b, 302c to the passenger threshold. When the number of allocated passengers exceeds the passenger threshold, the elevator controller 314 can determine the corresponding shuttle elevator is full. Accordingly, the elevator controller stops allocating passengers to the full shuttle elevator and then begins allocating passengers to another available shuttle elevator that has not reached its passenger threshold.

In one or more embodiments, the elevator controller 314 can actively modify a passenger allocation of a corresponding shuttle elevator 302a, 302b, 302c. When implementing the lobby sensor 306z as a person recognition sensor system, for example, the elevator controller 314 can track a location of one or more allocated passengers within the lobby 304. When an allocated passenger correctly moves to their directed shuttle elevator 302a, 302b, 302c, the elevator controller 314 can maintain their original allocation until the allocated passenger boards the corresponding shuttle elevator 302a, 302b, 302c and departs the lobby 304. When, however, an allocated passenger moves to a shuttle elevator 302a, 302b, 302c that is different from the originally allocated shuttle elevator 302a, 302b, 302c, the elevator controller 314 can remove the passenger allocation from the original originally allocated shuttle elevator 302a, 302b, 302c, and add a new passenger allocation to the shuttle elevator 302a, 302b, 302c chosen by the passenger.

Similarly, the elevator controller 314 can actively modify a passenger allocation of a corresponding shuttle elevator 302a, 302b, 302c when implementing motion detector sensors as the lobby sensor 306z and elevator sensors 306a, 306b, 306c. For example, the lobby sensor 306z can detect motion of a non-allocated passenger 308z located in the arrival display zone 312z, which in turn initiates the allocation process for allocating the passenger 308z to a shuttle elevator 302a, 302b, 302c. Once determining a targeted shuttle elevator (e.g., a non-crowded shuttle elevator 302c), the elevator controller 314 outputs assignment information, which is displayed on the arrival zone display unit 310z and instructs the passenger 308z to targeted shuttle elevator 302c. Accordingly, the previously non-allocated passenger (e.g., passenger 308z) is now deemed to be allocated to the targeted shuttle elevator (e.g., shuttle elevator 302c).

In one or more embodiments, once the passenger 308c is allocated, the elevator controller initiates a timer and initiates the time value to a time threshold. In the meanwhile, the elevator sensor 306c corresponding to the targeted shuttle elevator 302c continuously detects passengers entering and/or exiting the corresponding elevator display zone 312c, and outputs the detection to the elevator controller 314. When the elevator controller 314 determines that the elevator sensor 306c detects a passenger entering the corresponding elevator display zone 312c within the time threshold, the elevator controller determines that the most recent allocated passenger 308c has successfully reached the instructed target shuttle elevator 302c and maintains the allocation.

When, however, the elevator controller 314 determines that the elevator sensor 306c has not detected a passenger entering the corresponding elevator display zone 312c within the time threshold (i.e., the timer value exceeds the time threshold), the elevator controller determines that the most recent allocated passenger 308c has not moved to the instructed target shuttle elevator 302c and removes this most recent allocation corresponding to the target elevator 302z. This scenario may occur when, for example, the allocated passenger 308z disregards the assignment information displayed on the arrival zone display unit 3 10z and instead moves to a different shuttle elevator or abandons the elevator trip all together (e.g., leaves the building). Accordingly, the allocation and load of the shuttle elevators can be dynamically adjusted based on the actions of the passengers.

The elevator controller 314 can also revise allocations shuttle elevators 302a, 302b, 302c that may result from passengers deciding to move to shuttle elevators to which they were initially assigned. For instance, the elevator controller 314 may receive an output from elevator sensor 306b indicating a passenger 308b has unexpectedly entered its elevator display zone 312b. This scenario may occur, for example, when a passenger was previously assigned to a targeted shuttle elevator (e.g., shuttle elevator 302c) decides to either move directly to shuttle elevator 302b or leave the assigned elevator display zone 312c and enter elevator display zone 312b. In either case, the elevator controller 314 can dynamically add a new allocation to elevator display zone 312b.

In one or more non-limiting embodiments, the elevator controller 314 can also control operation of the shuttle elevators 302a, 302b, 302c to discourage or reduce elevator overcrowding or inefficient ride operation. For example, a turnstile (not shown) may be installed ahead of the shuttle elevator doors, and can be in signal communication with the elevator controller 314. The turnstile outputs a count value as passengers pass through the turnstile gate. The elevator controller 314 compares the turnstile count to a passenger allocation threshold assigned to the shuttle elevators 302a, 302b, 302c. When the turnstile count equals the passenger allocation threshold, the elevator controller 314 can output a turnstile control signal that locks the turnstile gate. Accordingly, passengers that were not allocated to the shuttle elevator may be prevented from overcrowding the elevator. Once the shuttle elevator departs, the elevator controller 314 can output control signal that unlocks the turnstile gate and allows a new group of allocated passengers to board the shuttle elevator once it becomes available.

In another example, the elevator controller 314 is pre-programmed with times at which the shuttle elevators 302a, 302b, 302c should depart the lobby 304. The times can be dynamically adjusted based on the passenger traffic within the lobby 304 or predicted traffic within the lobby 304 based on traffic history. For example, the elevator controller 314 is capable of executing a passenger traffic learning algorithm to control passenger boarding of a one or more shuttle elevators 302a, 302b, 302c and/or to shut down shuttle elevators that are not needed during times of light traffic.

As described herein, various non-limiting embodiments provide a shuttle elevator system including an improved passenger boarding system. The shuttle elevator boarding system includes one or more passenger sensors that operate in conjunction with an arrival display zone. The sensor(s) detect a current number of passengers allocated to a given in real-time. Based on the allocated passengers, the arrival display zone directs one or more passengers to a particular shuttle car that will provide the most efficient travel experience (e.g., the quickest departure without being overcrowded with an excessive number of passengers).

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described above, embodiments can be in the form of processor-implemented processes and devices for practicing those processes. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

Those of skill in the art will appreciate that various example embodiments are shown and described herein, each having certain features in the particular embodiments, but the present disclosure is not thus limited, but are only limited by the appended claims.

Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A shuttle elevator loading system (300) comprising:
a plurality of shuttle elevators (302a, 302b, 302c) configured to service a building lobby (304);
at least one sensor (306a, 306b, 306c, 306z) configured to detect at least one passenger (308a, 308b, 308c, 308z);
at least one display unit (310a, 310b, 310c, 310z) located at a display zone (312a, 312b, 312c, 312z) of the lobby (304); and
an elevator system controller (314) in signal communication with the at least one sensor (306a, 306b, 306c, 306z) and the at least one display unit (310a, 310b, 310c, 310z), the elevator system controller (314) configured to determine a number of allocated passengers (310a, 310b, 310c) corresponding to each shuttle elevator (302a, 302b, 302c), and to generate assignment information that directs a non-allocated passenger (308z) to an available shuttle elevator (302a, 302b, 302c);
wherein the at least one display unit includes an arrival display unit (310z) located in an arrival display zone (312z) that precedes the plurality of shuttle elevators (302a, 302b, 302c); and
**characterized in that**:
the at least one sensor comprises a lobby sensor (306z) and elevator sensors (306a, 306b, 306c); wherein the lobby sensor (306z) is configured to detect a passenger (308a, 308b, 308c, 308z) located at the arrival display zone (312z);
wherein the lobby sensor (306z) is configured to detect one or both of an allocated passenger (310a, 310b, 310c) that is allocated to a shuttle elevator (302a, 302b, 302c) respectively, and a non-allocated passenger (308z) that is not allocated to a shuttle elevator (302a, 302b, 302c);
wherein the elevator sensors (306a, 306b, 306c) are installed at a respective shuttle elevator (302a, 302b, 302c) and/or at a respective elevator display zone (312a, 312b, 312c);
wherein the elevator system controller (24) dynamically adjusts the number of allocated passengers (310a, 310b, 310c) corresponding to at least one shuttle elevator (302a, 302b, 303c) based at least in part on an output of the at least one sensor (306a, 306b, 306c, 306z) following an initial allocation assigned to the at least one passenger (310a, 310b, 310c); and
wherein the initial allocation is determined by the elevator controller (314) at an initial time at which a passenger enters the arrival display zone (312z).

2. The shuttle elevator loading system of claim 1, wherein the elevator system controller dynamically controls the at least one display unit based on the assignment information.

3. The shuttle elevator loading system of claim 1 or 2, wherein the elevator controller controls the elevator shuttle loading system to reduce passenger crowding based on the number of allocated passengers corresponding to at least one of the shuttle elevators.

4. The shuttle elevator loading system of any preceding claim, wherein the elevator system controller controls the arrival display unit to display the assignment information that directs a non-allocated passenger to an available shuttle elevator.

5. The shuttle elevator loading system of claim 4, wherein the displayed assignment information is dynamically changed as an availability of the shuttle elevators changes.

6. The shuttle elevator loading system of any preceding claim, wherein the elevator system controller is configured to control boarding of the at least one passenger based on a number of allocated passenger corresponding to a given shuttle elevator.

7. A method of controlling a shuttle elevator loading system comprising a plurality of shuttle elevators configured to service a building lobby, at least one display unit located at a display zone of the lobby and at least one sensor, wherein the at least one sensor comprises a lobby sensor (306z) and elevator sensors (306a, 306b, 306c); the method comprising:
detecting, via at least one sensor, at least one passenger of at least one shuttle elevator among a plurality of shuttle elevators servicing a building lobby;
determining, via an elevator system controller, a number of allocated passengers corresponding to each shuttle elevator; and
generating assignment information that directs a non-allocated passenger among the at least one passenger to an available shuttle elevator;
displaying the assignment information on an arrival display unit that is located at an arrival display zone (312z) that precedes the plurality of shuttle elevators.
and the method being **characterized by**:
detecting via the lobby sensor (306z) a passenger located at the arrival display zone (312z), and one or both of an allocated passenger that is allocated to a shuttle elevator (302a, 302b, 302c) respectively, and a non-allocated passenger (308z) that is not allocated to a shuttle elevator (302a, 302b, 302c);
dynamically adjusting the number of allocated passengers corresponding to at least one shuttle elevator based at least in part on an output of the at least one sensor following an initial allocation assigned to the at least one passenger;
wherein the initial allocation is determined by the elevator controller (314) at an initial time at which a passenger enters the arrival display zone (312z).

8. The method of claim 7, further comprising dynamically controlling the at least one display unit based on the assignment information.

9. The method of claim 7 or 8, further comprising controlling the elevator shuttle loading system to reduce passenger crowding based on the number of allocated passengers corresponding to at least one of the shuttle elevators.

10. The method of any of claims 7 to 9, further comprising controlling the arrival display unit to display the assignment information that directs a non-allocated passenger to an available shuttle elevator.

11. The method of claim 10, further comprising dynamically changing the assignment information as an availability of the shuttle elevators changes.

12. The method of any one of claims 7 to 11, further comprising controlling boarding of the at least one passenger based on a number of allocated passenger corresponding to a given shuttle elevator.

## Patentansprüche

1. Shuttle-Aufzug-Ladesystem (300), umfassend:
eine Vielzahl von Shuttle-Aufzügen (302a, 302b, 302c), die dazu konfiguriert ist, eine Gebäudelobby (304) zu bedienen;
mindestens einen Sensor (306a, 306b, 306c, 306z), der dazu konfiguriert ist, mindestens einen Passagier (308a, 308b, 308c, 308z) zu erkennen;
mindestens eine Anzeigeeinheit (310a, 310b, 310c, 310z), die sich in einer Anzeigezone (312a, 312b, 312c, 312z) der Lobby (304) befindet; und
eine Aufzugssystemsteuerung (314) in Signalverbindung mit dem mindestens einen Sensor (306a, 306b, 306c, 306z) und der mindestens einen Anzeigeeinheit (310a, 310b, 310c, 310z), wobei die Aufzugssystemsteuerung (314) dazu konfiguriert ist, eine Anzahl von zugeteilten Passagieren (310a, 310b, 310c) entsprechend jedem Shuttle-Aufzug (302a, 302b, 302c) zu bestimmen und Zuweisungsinformationen zu generieren, die einen nicht zugeteilten Passagier (308z) zu einem verfügbaren Shuttle-Aufzug (302a, 302b, 302c) leiten;
wobei die mindestens eine Anzeigeeinheit eine Ankunftsanzeigeeinheit (310z) beinhaltet, die sich in einer Ankunftsanzeigezone (312z) befindet, die der Vielzahl von Shuttle-Aufzügen (302a, 302b, 302c) vorausgeht; und
**dadurch gekennzeichnet, dass**:
der mindestens eine Sensor einen Lobbysensor (306z) und Aufzugsensoren (306a, 306b, 306c) umfasst; wobei der Lobbysensor (306z) dazu konfiguriert ist, einen Passagier (308a, 308b, 308c, 308z) zu erkennen, der sich in der Ankunftsanzeigezone (312z) befindet;
wobei der Lobbysensor (306z) dazu konfiguriert ist, einen oder beide von einem zugeteilten Passagier (310a, 310b, 310c), der einem Shuttle-Aufzug (302a, 302b, 302c) zugeteilt ist, bzw. einem nicht zugeteilten Passagier (308z), der einem Shuttle-Aufzug (302a, 302b, 302c) nicht zugeteilt ist, zu erkennen;
wobei die Aufzugsensoren (306a, 306b, 306c) an einem jeweiligen Shuttle-Aufzug (302a, 302b, 302c) und/oder an einer jeweiligen Aufzugsanzeigezone (312a, 312b, 312c) installiert sind;
wobei die Aufzugssystemsteuerung (24) die Anzahl der zugeteilten Passagiere (310a, 310b, 310c) entsprechend mindestens einem Shuttle-Aufzug (302a, 302b, 303c) mindestens teilweise basierend auf einer Ausgabe des mindestens einen Sensors (306a, 306b, 306c, 306z) nach einer anfänglichen Zuteilung, die dem mindestens einen Passagier (310a, 310b, 310c) zugewiesen wurde, dynamisch anpasst; und
wobei die anfängliche Zuteilung durch die Aufzugssteuerung (314) zu einem anfänglichen Zeitpunkt bestimmt wird, zu dem ein Passagier die Ankunftsanzeigezone (312z) betritt.

2. Shuttle-Aufzug-Ladesystem nach Anspruch 1, wobei die Aufzugssystemsteuerung die mindestens eine Anzeigeeinheit basierend auf den Zuweisungsinformationen dynamisch steuert.

3. Shuttle-Aufzug-Ladesystem nach Anspruch 1 oder 2, wobei die Aufzugssteuerung das Shuttle-Aufzug-Ladesystem steuert, um ein Gedränge an Passagieren basierend auf der Anzahl von zugeteilten Passagieren entsprechend mindestens einem der Shuttle-Aufzüge zu verringern.

4. Shuttle-Aufzug-Ladesystem nach einem der vorhergehenden Ansprüche, wobei die Aufzugssystemsteuerung die Ankunftsanzeigeeinheit steuert, um die Zuweisungsinformationen anzuzeigen, die einen nicht zugeteilten Passagier zu einem verfügbaren Shuttle-Aufzug leiten.

5. Shuttle-Aufzug-Ladesystem nach Anspruch 4, wobei die angezeigten Zuweisungsinformationen dynamisch geändert werden, wenn sich die Verfügbarkeit der Shuttle-Aufzüge ändert.

6. Shuttle-Aufzug-Ladesystem nach einem der vorhergehenden Ansprüche, wobei die Aufzugssystemsteuerung dazu konfiguriert ist, das Einsteigen des mindestens einen Passagiers basierend auf einer Anzahl von zugeteilten Passagiere entsprechend einem bestimmten Shuttle-Aufzug zu steuern.

7. Verfahren zum Steuern eines Shuttle-Aufzug-Ladesystems, umfassend eine Vielzahl von Shuttle-Aufzügen, die dazu konfiguriert sind, eine Gebäudelobby zu bedienen, mindestens eine Anzeigeeinheit, die sich in einer Anzeigezone der Lobby befindet, und mindestens einen Sensor, wobei der mindestens eine Sensor einen Lobby-Sensor (306z) und Aufzugsensoren (306a, 306b, 306c) umfasst; wobei das Verfahren Folgendes umfasst:
Erkennen von mindestens einem Passagier von mindestens einem Shuttle-Aufzug unter einer Vielzahl von Shuttle-Aufzügen, die eine Gebäudelobby bedient, über mindestens einen Sensor;
Bestimmen einer Anzahl von zugeteilten Passagieren entsprechend jedem Shuttle-Aufzug über eine Aufzugssystemsteuerung; und
Generieren von Zuweisungsinformationen, die einen nicht zugeteilten Passagier unter dem mindestens einen Passagier zu einem verfügbaren Shuttle-Aufzug leiten;
Anzeigen der Zuweisungsinformationen auf einer Ankunftsanzeigeeinheit, die sich in einer Ankunftsanzeigezone (312z) befindet, die der Vielzahl von Shuttle-Aufzügen vorausgeht;
und wobei das Verfahren **gekennzeichnet ist durch**:
Erkennen eines Passagiers, der sich in der Ankunftsanzeigezone (312z) befindet, und eines oder beiden von einem zugeteilten Passagier, der einem Shuttle-Aufzug (302a, 302b, 302c) zugeteilt ist, bzw. einem nicht zugeteilten Passagier (308z), der einem Shuttle-Aufzug (302a, 302b, 302c) nicht zugeteilt ist, über den Lobbysensor (306z);
dynamisches Einstellen der Anzahl von zugeteilten Passagieren entsprechend mindestens einem Shuttle-Aufzug mindestens teilweise basierend auf einer Ausgabe des mindestens einen Sensors nach einer dem mindestens einen Passagier zugewiesenen anfänglichen Zuteilung;
wobei die anfängliche Zuteilung **durch** die Aufzugssteuerung (314) zu einem anfänglichen Zeitpunkt bestimmt wird, zu dem ein Passagier die Ankunftsanzeigezone (312z) betritt.

8. Verfahren nach Anspruch 7, ferner umfassend dynamisches Steuern der mindestens einen Anzeigeeinheit basierend auf den Zuweisungsinformationen.

9. Verfahren nach Anspruch 7 oder 8, ferner umfassend Steuern des Shuttle-Aufzug-Ladesystems zum Verringern eines Gedränges an Passagieren basierend auf der Anzahl von zugeteilten Passagieren entsprechend mindestens einem der Shuttle-Aufzüge.

10. Verfahren nach einem der Ansprüche 7 bis 9, ferner umfassend Steuern der Ankunftsanzeigeeinheit zum Anzeigen der Zuweisungsinformationen, die einen nicht zugeteilten Passagier zu einem verfügbaren Shuttle-Aufzug leiten.

11. Verfahren nach Anspruch 10, ferner umfassend dynamisches Ändern der Zuweisungsinformationen, wenn sich eine Verfügbarkeit der Shuttle-Aufzüge ändert.

12. Verfahren nach einem der Ansprüche 7 bis 11, ferner umfassend Steuern des Einsteigens des mindestens einen Passagiers basierend auf einer Anzahl von zugeteilten Passagieren entsprechend einem bestimmten Shuttle-Aufzug.

## Revendications

1. Système de chargement de navette d'ascenseur (300) comprenant :
une pluralité de navettes d'ascenseur (302a, 302b, 302c) configurées pour desservir un hall d'immeuble (304) ;
au moins un capteur (306a, 306b, 306c, 306z) configuré pour détecter au moins un passager (308a, 308b, 308c, 308z) ;
au moins une unité d'affichage (310a, 310b, 310c, 310z) située au niveau d'une zone d'affichage (312a, 312b, 312c, 312z) du hall (304) ; et
un dispositif de commande de système d'ascenseur (314) en communication de signaux avec l'au moins un capteur (306a, 306b, 306c, 306z) et l'au moins une unité d'affichage (310a, 310b, 310c, 310z), le dispositif de commande de système d'ascenseur (314) étant configuré pour déterminer un nombre de passagers attribués (310a, 310b, 310c) correspondant à chaque navette d'ascenseur (302a, 302b, 302c), et pour générer des informations d'affectation qui dirigent un passager non attribué (308z) vers une navette d'ascenseur (302a, 302b, 302c) disponible ;
dans lequel l'au moins une unité d'affichage comporte une unité d'affichage d'arrivée (310z) située dans une zone d'affichage d'arrivée (312z) qui précède la pluralité de navettes d'ascenseur (302a, 302b, 302c) ; et
**caractérisé en ce que** :
l'au moins un capteur comprend un capteur de hall (306z) et des capteurs d'ascenseur (306a, 306b, 306c) ; dans lequel le capteur de hall (306z) est configuré pour détecter un passager (308a, 308b, 308c, 308z) situé dans la zone d'affichage d'arrivée (312z) ;
dans lequel le capteur de hall (306z) est configuré pour détecter un ou les deux passagers parmi un passager attribué (310a, 310b, 310c) qui est attribué à une navette d'ascenseur (302a, 302b, 302c) respectivement et un passager non attribué (308z) qui n'est pas attribué à une navette d'ascenseur (302a, 302b, 302c) ;
dans lequel les capteurs d'ascenseur (306a, 306b, 306c) sont installés au niveau d'une navette d'ascenseur (302a, 302b, 302c) respective et/ou au niveau d'une zone d'affichage d'ascenseur (312a, 312b, 312c) respective ;
dans lequel le dispositif de commande de système d'ascenseur (24) ajuste de manière dynamique le nombre de passagers attribués (310a, 310b, 310c) correspondant à au moins une navette d'ascenseur (302a, 302b, 303c) sur la base au moins en partie d'une sortie de l'au moins un capteur (306a, 306b, 306c, 306z) suite à une affectation initiale attribuée à l'au moins un passager (310a, 310b, 310c) ; et
dans lequel l'affectation initiale est déterminée par le dispositif de commande d'ascenseur (314) à un instant initial auquel un passager entre dans la zone d'affichage d'arrivée (312z).

2. Système de chargement de navette d'ascenseur selon la revendication 1, dans lequel le dispositif de commande de système d'ascenseur commande de manière dynamique l'au moins une unité d'affichage sur la base des informations d'affectation.

3. Système de chargement de navette d'ascenseur selon la revendication 1 ou 2, dans lequel le dispositif de commande d'ascenseur commande le système de chargement de navette d'ascenseur pour réduire l'encombrement des passagers sur la base du nombre de passagers attribués correspondant à au moins une des navettes d'ascenseur.

4. Système de chargement de navette d'ascenseur selon une quelconque revendication précédente, dans lequel le dispositif de commande de système d'ascenseur commande l'unité d'affichage d'arrivée pour afficher les informations d'affectation qui dirigent un passager non attribué vers une navette d'ascenseur disponible.

5. Système de chargement de navette d'ascenseur selon la revendication 4, dans lequel les informations d'affectation affichées sont modifiées de manière dynamique à mesure que la disponibilité des navettes d'ascenseur change.

6. Système de chargement de navette d'ascenseur selon une quelconque revendication précédente, dans lequel le dispositif de commande de système d'ascenseur est configuré pour commander l'embarquement de l'au moins un passager sur la base d'un nombre de passagers attribués correspondant à une navette d'ascenseur donnée.

7. Procédé de commande d'un système de chargement de navette d'ascenseur comprenant une pluralité de navettes d'ascenseur configurées pour desservir un hall d'immeuble, au moins une unité d'affichage située au niveau d'une zone d'affichage du hall et au moins un capteur, dans lequel l'au moins un capteur comprend un capteur de hall (306z) et des capteurs d'ascenseur (306a, 306b, 306c) ; le procédé comprenant :
la détection, via au moins un capteur, d'au moins un passager d'au moins une navette d'ascenseur parmi une pluralité de navettes d'ascenseur desservant un hall d'immeuble ;
la détermination, via un dispositif de commande de système d'ascenseur, d'un nombre de passagers attribués correspondant à chaque navette d'ascenseur ; et
la génération d'informations d'affectation qui dirigent un passager non attribué parmi l'au moins un passager vers une navette d'ascenseur disponible ;
l'affichage des informations d'affectation sur une unité d'affichage d'arrivée qui est située au niveau d'une zone d'affichage d'arrivée (312z) qui précède la pluralité de navettes d'ascenseur
et le procédé étant **caractérisé par** :
la détection via le capteur de hall (306z) d'un passager situé dans la zone d'affichage d'arrivée (312z), et d'un ou des deux passagers parmi un passager attribué qui est attribué à une navette d'ascenseur (302a, 302b, 302c) respectivement, et un passager non attribué (308z) qui n'est pas attribué à une navette d'ascenseur (302a, 302b, 302c) ;
l'ajustement de manière dynamique du nombre de passagers attribués correspondant à au moins une navette d'ascenseur sur la base au moins en partie d'une sortie de l'au moins un capteur suite à une affectation initiale attribuée à l'au moins un passager ;
dans lequel l'affectation initiale est déterminée par le dispositif de commande d'ascenseur (314) à un instant initial auquel un passager entre dans la zone d'affichage d'arrivée (312z) .

8. Procédé selon la revendication 7, comprenant en outre la commande de manière dynamique de l'au moins une unité d'affichage sur la base des informations d'affectation.

9. Procédé selon la revendication 7 ou 8, comprenant en outre la commande du système de chargement de navette d'ascenseur pour réduire l'encombrement des passagers sur la base du nombre de passagers attribués correspondant à au moins une des navettes d'ascenseur.

10. Procédé selon l'une quelconque des revendications 7 à 9, comprenant en outre la commande de l'unité d'affichage d'arrivée pour afficher les informations d'affectation qui dirigent un passager non attribué vers un ascenseur de navette disponible.

11. Procédé selon la revendication 10, comprenant en outre la modification de manière dynamique des informations d'affectation à mesure que la disponibilité des navettes d'ascenseur change.

12. Procédé selon l'une quelconque des revendications 7 à 11, comprenant en outre la commande de l'embarquement de l'au moins un passager sur la base d'un nombre de passagers attribués correspondant à une navette d'ascenseur donnée.
